# EUROPEAN PATENT APPLICATION

(11) **EP 0 678 355 A1**
(43) Date of publication of application: **25.10.1995**
(21) Application number: 94500069.3
(22) Date of filing: 18.04.1994
(51) Int. Cl.: B23D 47/04, B27B 5/06

(54) **Conveying device for panel saws**

(71) Applicant: CONSTRUCCIONES ESPANOLAS DE HERRAMIENTAS INDUSTRIALES S.A., E-08140 Caldas De Montbui (Barcelona) (ES)
(72) Inventor: Cuenca Arasa, Manuel, ES-08140 Caldas de Montbui, (Barcelona) (ES)
(74) Representative: Alonso Langle, Emilio

(57) **Abstract**

The invention refers to a non accumulative lock system for board cutting machines, consisting on the establishment of a lock line on the opposite side of the cutting line (6) that provides the boards (3). This lock line is prehensile through mandibles (9) and (10) that stop the boards (3) on the opposite part of the feeding pushing clamp (4), which slide the boards (3) until they get in contact with the locks (8) that are on the mandible carrier (13). These are placed over a guide (14), through which the locks (8) go forward or backwards when they have to determine the distance between the front part of the locks (8) and the cutting line (6) according to the program that is guided by a microprocessor, establishing the cutting line measurement from the initial tolerance.

## Description

### OBJECT OF THE INVENTION

The aim of the invention is a non accumulative lock system for board cutting machines specifically made for board cutting machines that are able to work in an automatic and continuous way from the board charger and connected or not to the initial cutting line.

### BACKGROUND OF THE INVENTION

There are board cutting machines in the market that are guided by a program with a microprocessor which enables the user to see in a screen the programming at the same time as the improvements are being made.

As an example we can mention the italian cutting machine with numerical control CASADEI GIANFRANCO, S.P.A., one of the machines that are in the market, enough representative in nowdays state of technique.

The author does not know other sources of information, as for example the technical or documentary literature of patents that may exist as a definition of nowadays state of the art. However, because of his especialization, he knows the supply that is being produced in this sector of the market and for this reason he can judge the reach of the invention that he is proposing.

As indicated in the previous paragraph, the machine offered by CASADEI GIANFRANCO, S.P.A. is representative of the State of Technique. This machine bases its singularity in the independent motorized pushing system which is controlled by an only programmer, assisted by a computer.

As indicated by its name, the pushing system acts pushing the boards from a feeding table to a cutting line, that is, after an initial squaring operation and fixing the board to be cut, an immobilization of these boards is produced and then a cut right in the right place is made.

The first improvement establishes an initial measurement which will be repeated or not in a second cut. In any case, it will be an addition to the first. That is, if in the first cut an A width is programmed with a T tolerance, more/less 0.2 milimetres, in the second cut, being the A measurement or other, the tolerance would be, although not necessarily, T multiplied by two.

The maximum admissible tolerance in a board cut is more or less 0.2 mm and so the accumulative system used by the referred machine. If such an initial error is produced, after four cuts it would easily drive to an error for an excess of 4 mm, which would need a later repairing by a milling cutter.

We don't want, not even insinuate, that the CASADEI GIANFRANCO machines offered in the market present these problems, on the contrary they are safe and reliable machines, even though they use an accumulative system of measurement of cut width; however we can affirm that keeping these machines within the admisible tolerance of cut means a great precission and so great specifications.

The only way to look through a reliable result without the machine increase of price is varying the system and making the machine be more simple and so cheaper.

This is the starting point for the philosophy of the invention and so the proposal that this document presents in the following paragraphs.

### DISCLOSURE OF THE INVENTION

According to all that has been explained, the invention has to provide the board cutting machine, specially with boards covered with a surface of stratified plastic, with a non accumulative lock system in which each measurement starts from zero and therefore the tolerance in the measurement is constantly kept.

According to the invention, the machine is fed through the fore part and the measure of the piece to be cut is given from the cutting line to a stopping line located in the rear part.

The board feeding is given through mechanical systems, specially from a clutch tyre that takes the boards from a lifting platform and, over the machine bench, makes them go under the cutting deck that acts also as a board stopper.

The lifting platform technique is known and used in this sector in different installations of automatic and semiautomatic cut. This type of platforms are used in the graphic industry to provide sheets to a printing machine. There are also those type of platforms in automatic installations for metal cutting and in all those cases in which a sincronicity in the consumption of boards piled up, and cyclicly served by a lateral sliding to an operative station of cutting, insertment, mechanization, stamping or any other manipulation, is needed.

The tyre clutch or cluthes are disposed in transversed decks to the boards to be cut and, according to the program, they slide, attacking two or more boards simultaneously piled up to the cutting line.

A conventional cutting line consists of a disc saw that goes through a guide on a cart which simultaneously makes a cut of a regulated depth that coincides with the track left by the milling cutter, leaving an empty space in the place where the circular sheet of the saw will be shown in a way that the exit of the tool will not find stratified plastic and therefore the cut will be clean without lateral notch.

The milling cut is produced at the same time as the cutting while the boards are immobilized.

The invention, presented inside of this type of machines, requires as a fundamental condition the feeding on one side of the cutting line and, on the other, the lock.

According to the invention, after the cutting line, two or more locks are established, preferably, but not always, a line of four or six locks, each of them including a mandible clamp with a tyre execution system, although this last point is not significant. Only a certain firmness in the fixing is needed and, at the same time, a certain softness so as not to affect the material, marking it, and therefore, leaving it useless for its function.

All the locks are linked to a lock carrier, which slides in a way able to be modified, but always referred to the distance from the edge next to the locks of the cutting line, to the lock front, in a way that in all cases the boards arrive to the reception zones, contact the locks, are tied up and then are carried tho the cutting measurement, transferred outside once they are cut, and set free to be transferred to a lateral cutting station or piled up for later operations of mechanism and/or ending.

The numerical programmer control system, with a microprocessor, will be the one charged of the activation of the feeding clamps of boards, establishing the locks, putting the exact measurement between the cutting sheet and the board edge and unchaining the operating rutine according to the program sequence. This type of control systems are supplied in the market with Intel microprocessors, a trade mark of INTEL CORPORATION, with TEXAS INSTRUMENTS microprocessors or any other integrated circuit manufacturer that are part of circuits which guide different static parts, and essential to the machine, they are just used in it and are offered in the catalogue with operative specifications, the reason for which they will be mentioned as elements without special mention to their architechtural appearance, configuration and performance.

Summing up, the non accumulative lock system for board cutters, of the type cutter with a milling machine emptying a space coinciding with the exit of the tool, which supported by a cart that goes through a guide under which the cutting boards are disposed, consists of the establishment on the opposite side of the cutting line through which the boards are provided, of a prehensile lock line, able to stop those boards.

The stopping of the boards is made in the front part opposite to the front part through which the clamp of a conventional board feeding pushes the boards to the cutting line, and under the guide through which the tools carrier cart slides until its front leans against the lock line located behind the machine.

The lock line, as we said before, can move mechanically, getting closer or far according to the cutting line in order to establish, each time it is going to cut, the distance between this cutting line and the edge of the boards in front of the clamp edge pushing the board feeder.

The lock front is conventionally guided by a microprocessor program whose point of reference is always from the cutting line till the edge of the board which is in front of the locks, in a way that, for each case it starts from zero tolerance to establish the measurement in which the piece will be cut.

The lock line is constituted by series of locks. Each one includes an inferior mandible which is under the board level or at the level of the boards, and a superior mandible which is mobile and acts as a pression element, fixing the boards with the locks that go forwards or backwards to the cutting line regarding their position and according to the preestablished cutting program.

The lock group will be placed in a mandible carrier support which moves on the guides that are in an adecuate position not to interfere in the level of the boards settlement, before and after the cut.

### DESCRIPTION OF DRAWINGS

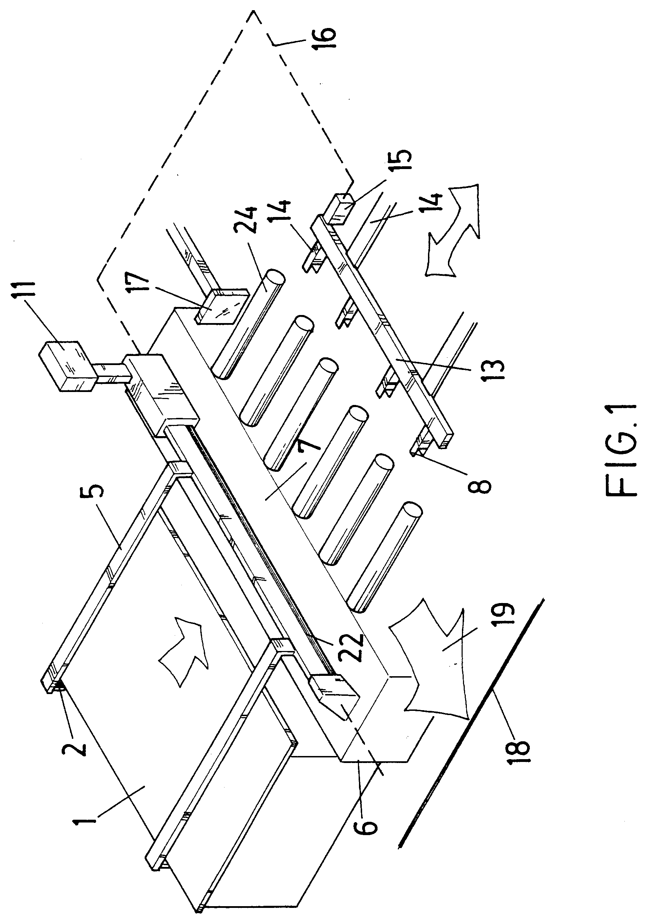

In Figure.1 appears the view of an accumulative system of locks for board cutters joined to a conventional board cutting machine.

In Figure.2, a detail of the operation of the machine and the position of its elements are shown. In Figure.3 a detail of a board lock is represented.

### PREFERRED EXECUTION OF THE INVENTIOM

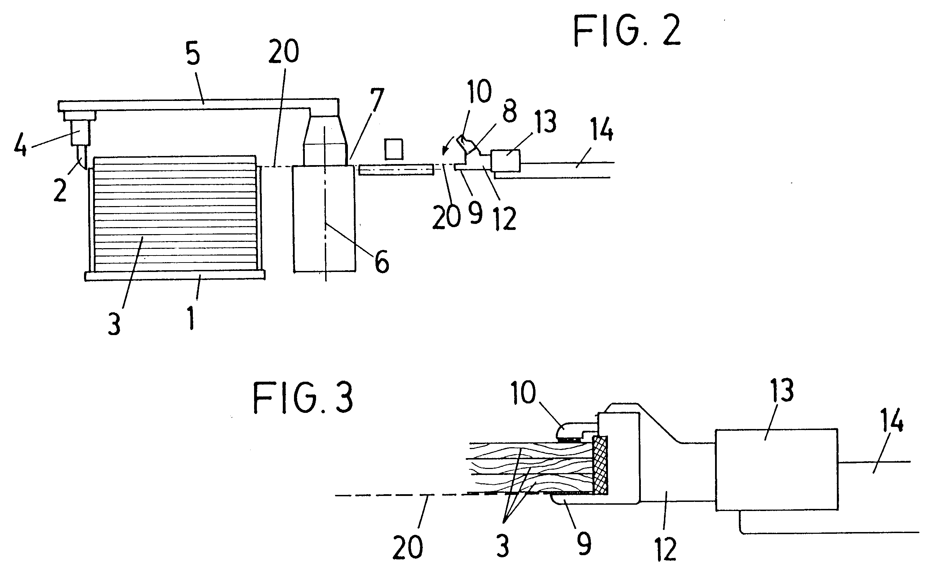

According to all that has been explained, in a board feeding platform (1) provided with sliding clamps (2) for boards (3), clamps that are placed in carts (4) located in deck guides (5), boards are placed (3) to be first lifted to the desired level and then transferred to the cutting line (6), represented in Figure.2 with lines.

The platform (1) lifts the number of boards (3) wished, usually three, to the adecuate hight so that the sliding clamps (2) can displace them, moving along the deck guides (5) until they surpass the bench (7) of the whole board cutting machine.

According to the invention, the locks (8) placed in the opposite part of the cutting line (6) in the cutting tool (tool not represented), are located in a way that they receive the board and they lean their frontal part on the lock so that they remain vertically at the same level.

Other mechanisms of correct pilling up have already being performed in the board lifting platform or board feedeing board platform (1) (3).

The locks (8) have inferior mandibles on which lay the boards (3). A superior mandible (10), mobile, will close the lock and exert the necessary pression in order to stop the boards.

According to the programmer instructions (11), the front part (12), that incorpores the mandibles in its mandibles carrier (13), will move in its guides that will be in an sub-level or over-level, that is under or over the board (3) line level (20), until it succeeds in producing this movement between the lock front (8) and the cutting line (6).

The distance between the cutting line (6) and the lock (8) will be always known by the programmer (11), as for example with the exact knowledge of the use of the encoder, a highly precise electronic instrument, integrated in a cogged or friction wheel, or the activation of reference sensors. In any case it is not a significant technique to the invention development.

A bus line (16) between the measurement instrument (15) and the programmer (11) keeps this one in a constant control over the system, considering as prior the distance between the cutting line and the front part formed by the locks.

Once it is established, pushing against the feeder, that is, sliding the locks towards the cutting line (6), the boards (3) remain at a precise distance and the mechanical action is produced with the boards still by the clamps of mandibles (9) and (10), and by the fixing rammer (22).

After the cut, the lock group, once set free from the clamps, the cut pieces go backwards, behind the programmed measurement according to line (23). The lock group waits until it receives again the boards (3) while the cut pieces are pushed (1) over the rolls (24) to the other cutting machine in a perpendicular position which is marked by line (18) that, following line (19), will receive the pieces and cut them transversely, as it has been explained before and being helped by the same elements.

It is not necessary to consider anymore the explained realization, for an expert to be able to execute the invention in the right way and according to the explanations that will be given forward.

## Claims

1. Non accumulative lock system for board cutting machines, the type of machine in which a milling cutter empties a space coincidental with the tool exit, tool that is supported on a cart that goes through a guide under which the boards to be cut are situated. It has the feature of establishing at the opposite side of the cutting line (6), through which all the boards are provided, a lock line (8) which is prehensile and able to stop the boards (3) on the opposite side and in front of the clamp (4) of the conventional board feeder (1) that pushes the boards (3) under the guides, through which the tool carrier cart slides, until it leans on the frontal lock line (8). This one can slide by a mechanical system, getting closer or further regarding the cutting line (6), in order to establish each time the distance between the cutting line (6) and the edge of the boards opposite to the pushing clamp (4) of the board (3) feeder machine (1), being in front of the locks, conventionally guided by a programmer with a microprocessor, which reference measurement is always from the cutting line (6) till the edge of the board opposite to the lock line (8).

2. Non accumulative lock system for board cutting machines, as previous claims, featured by several locks in the lock line (8). Each lock has an inferior and a superior mandible which moves and acts as a pressure element regarding the inferior mandible (9), fixing the boards in front of the locks that go forward and backwards from the cutting line, according to which they are situated, following the cutting program. The group of locks should be placed on a mandible carrier (13) support that slides over guides which are situated in an adequate position not to interfere the board level before and after the cut.

3. Non accumulative lock system for board cutting machines, according to the first and to the second claim, where the locks (8), once the mandibles (9) and (10) are closed, are those that get the still boards and situate them, getting closer or far, following the initial reference of the cutting line (6), to establish the cut measurement.
